(19) Europäisches Patentamt
European Patent Office
Office européen des brevets

(11) Numéro de publication : **0 301 988 B1**

(12) **FASCICULE DE BREVET EUROPEEN**

(45) Date de publication du fascicule du brevet :
03.04.91 Bulletin 91/14

(51) Int. Cl.⁵ : **E04C 3/40, E04B 1/24**

(21) Numéro de dépôt : 88440063.1

(22) Date de dépôt : 26.07.88

(54) **Dispositif d'assemblage de deux arbalétriers de ferme entre eux, au niveau du faîtage, pour la réalisation de charpentes et de structures.**

(30) Priorité : 27.07.87 FR 8710719

(43) Date de publication de la demande :
01.02.89 Bulletin 89/05

(45) Mention de la délivrance du brevet :
03.04.91 Bulletin 91/14

(84) Etats contractants désignés :
BE DE ES GB IT SE

(56) Documents cités :
WO-A-86/04104
FR-A- 1 151 201
FR-A- 2 352 202
FR-A- 2 588 586
US-A- 3 255 769

(73) Titulaire : BATOR S.A.
1, rue du Commerce
F-67116 Reichstett (FR)

(72) Inventeur : Fritz, André
8 rue des Saules
F-67930 Beinheim (FR)
Inventeur : Gerlinger, Jean
10 rue de la Zorn
F-67170 Geudertheim (FR)

(74) Mandataire : Nuss, Pierre
10, rue Jacques Kablé
F-67000 Strasbourg (FR)

EP 0 301 988 B1

Jouve, 18, rue Saint-Denis, 75001 PARIS

## Description

La présente invention concerne un dispositif d'assemblage de deux arbalétriers de ferme entre eux au niveau du faîtage pour la réalisation de charpentes, et plus généralement de structures.

Actuellement, pour la réalisation d'une charpente ou d'une structure, l'assemblage des deux arbalétriers de ferme entre eux au niveau du faîtage ne peut se faire que grâce à différents éléments de serrage tels que boulons, goujons, vis, broches, etc..., et à l'aide de pièces de liaison non moulées.

Il est donc nécessaire, pour effectuer un tel assemblage, de recourir à un outillage complet et, le cas échéant, de réaliser cette opération à plusieurs personnes, afin de positionner exactement les pièces de liaison simultanément sur les deux arbalétriers. Un tel montage nécessite donc un temps considérable et un investissement en matériel et en hommes relativement important. De plus, les pièces de liaison augmentent le poids de la charpente ou de la structure, ainsi d'ailleurs que son volume.

Par ailleurs, il arrive qu'au montage, certaines pièces de liaison ou autres fassent défaut, ce qui entraîne inévitablement une perte de temps, et très souvent des problèmes au niveau de la sécurité, car il n'est pas rare que les monteurs, dans le souci de progresser rapidement, ne remplacent la pièce défaillante par une pièce destinée à un autre usage.

Par le document FR-A-2 588 586, on connaît un dispositif d'assemblage de profilés, se présentant sous la forme d'une pièce de liaison, à savoir un manchon d'un seul tenant constitué par deux tronçons assemblés entre eux selon un angle prédéterminé, chacun des deux tronçons étant disposé entièrement à l'intérieur de l'extrémité correspondante des profilés respectifs à assembler. Ainsi l'assemblage de deux profilés est réalisé par un emboîtement total des tronçons dudit manchon dans chacun desdits profilés et par leur fixation au moyen de boulons.

Le problème général à résoudre par l'objet de la présente demande, est de réaliser un dispositif d'assemblage dans lequel aucune pièce de liaison ni aucun élément de serrage n'intervient. Par ailleurs, ce dispositif doit être le plus léger et le moins volumineux possible (afin de permettre un stockage et un chargement aisé), tout en présentant une sûreté suffisante au levage, chaque arbalétrier de la ferme étant généralement assemblé avec l'autre arbalétrier à même le sol, l'ensemble étant ensuite levé.

Un tel dispositif devra permettre à une seule personne de réaliser l'assemblage de deux arbalétriers entre eux sans aucun outillage (plus de risque de perte, simplification, économie de matériel...) et sans aucune pièce de liaison à fixer lors de l'assemblage afin de rendre l'ensemble plus sûr, d'entraîner une simplification de montage ainsi qu'un gain de temps substantiel. Enfin, tous ces paramètres concourent, bien entendu, à rendre un tel mode d'assemblage bien plus économique que les modes d'assemblage actuels.

Selon la présente invention, le dispositif d'assemblage de deux arbalétriers de ferme entre eux au niveau du faîtage, pour la réalisation de charpentes et structures, est caractérisé en ce qu'il consiste en deux pièces moulées, identiques entre elles, chacune étant disposée, de manière fixe, partiellement à l'intérieur de l'extrémité supérieure de chaque arbalétrier, l'une des deux pièces moulées étant disposée tête-bêche par rapport à l'autre pièce moulée, chaque pièce moulée comportant un bossage et un trou de section identique, la dimension du trou étant très légèrement supérieure à celle du bossage de manière à ce que l'assemblage des deux arbalétriers entre eux s'effectue par simple emboîtement des bossages dans les trous, chaque emboîtement étant, en outre, pourvu d'un dispositif de verrouillage.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue, de face, d'une structure composée d'une ferme et de différents poteaux de soutien ;

la figure 2 est une vue, de face, à plus grande échelle que la figure 1, d'un dispositif d'assemblage conforme à l'invention et reliant les deux arbalétriers de la ferme entre eux ;

la figure 3 est une vue, en coupe, à même échelle que la figure 2, et selon la ligne A-A de la figure 2, et la figure 4 est une vue, en coupe, à même échelle que les figures 2 et 3, et selon la ligne B-B de la figure 2.

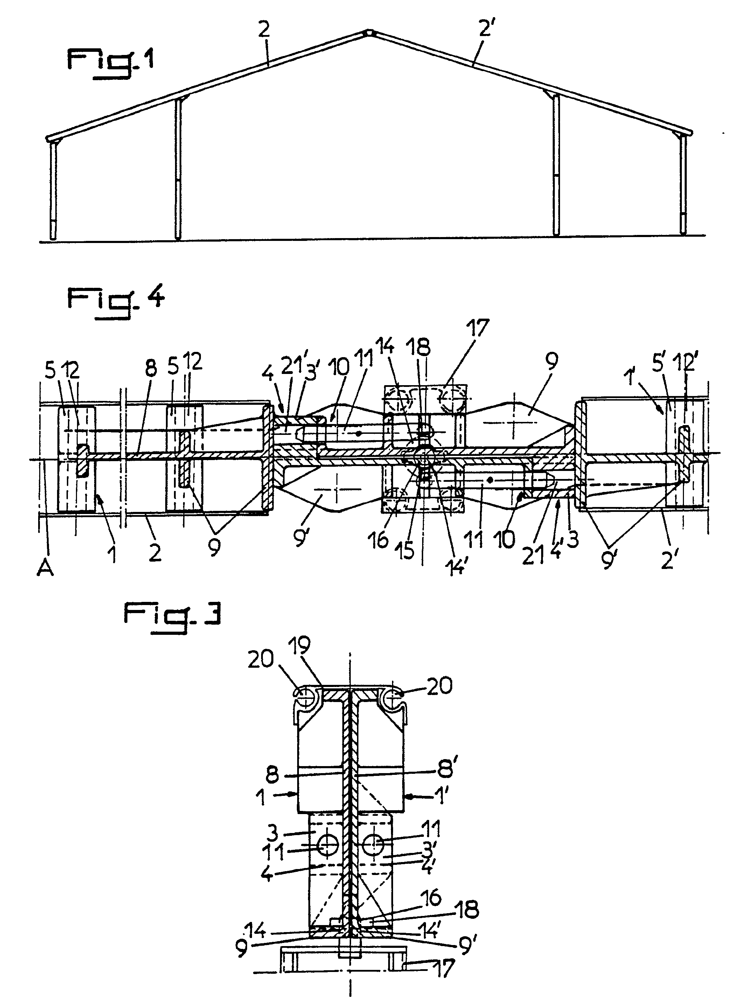

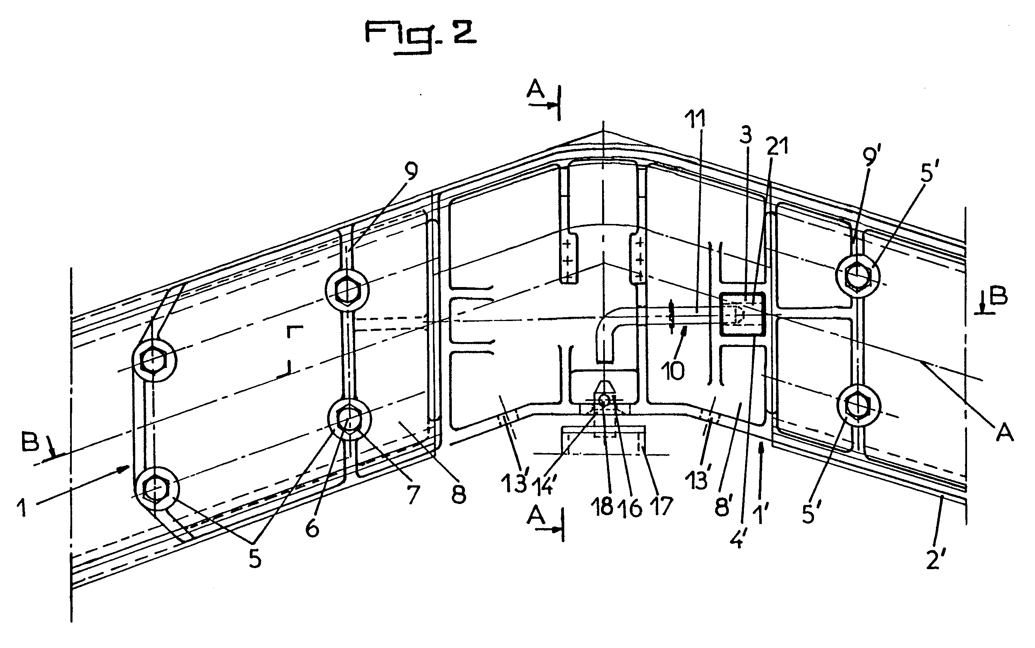

Conformément à l'invention, et comme le montrent les figures 1 et 2 des dessins annexés, le dispositif d'assemblage consiste en deux pièces moulées 1, 1', identiques entre elles, chacune étant disposée, de manière fixe, partiellement à l'intérieur de l'extrémité supérieure de chaque arbalétrier 2, 2', la pièce moulée 1 étant disposée tête-bêche par rapport à la pièce moulée 1', chaque pièce moulée 1, 1' comportant un bossage 3, 3' et un trou 4, 4' de section identique, la dimension du trou 4, 4' étant très légèrement supérieure à celle du bossage 3, 3' de manière à ce que l'assemblage des deux arbalétriers 2, 2' entre eux s'effectue par simple emboîtement du bossage 3 dans le trou 4' et du bossage 3' dans le trou 4, chaque emboîtement 3-4' et 3'-4 étant, en outre, pourvu d'un dispositif de verrouillage 10.

Comme on peut le voir sur la figure 2, chaque bossage 3, 3' est situé à une extrémité de la pièce moulée 1, 1' de telle manière que l'emboîtement bossage 3 – trou 4' s'effectue à proximité immédiate de l'arbalétrier 2' et l'emboîtement bossage 3' – trou 4 s'effectue à proximité immédiate de l'arbalétrier 2.

Cette disposition permet d'éloigner au maximum chaque emboîtement de l'autre et d'assurer ainsi une rigidité et une résistance optimales pour chaque assemblage.

Conformément aux figures 2 à 4, chaque pièce moulée 1, 1′ comprend différents bossages supplémentaires 5, 5′ permettant de maintenir les pièces moulées 1, 1′ dans les arbalétriers 2, 2′, la longueur de ces bossages 5, 5′ correspondant sensiblement à la section interne des arbalétriers 2, 2′. Ces bossages 5, 5′ servent de support à un ensemble de fixation, par exemple, vis 6 – écrou 7, la vis 6 traversant le bossage 5, 5′ par un orifice 12, 12′, ces bossages 5, 5′ étant, par ailleurs, reliés entre eux par un voile 8, 8′ situé dans le plan perpendiculaire aux axes centraux des bossages 5, 5′ et légèrement décalé par rapport à l'axe de symétrie A de chaque arbalétrier 2, 2′, et par des nervures 9, 9′ situés, par exemple, dans le plan passant par les axes centraux des bossages 5, 5′.

Préalablement donc, par exemple, immédiatement après la fabrication des arbalétriers 2, 2′, il y a lieu d'insérer à l'intérieur de l'extrémité supérieure de chaque arbalétrier 2, 2′ une pièce moulée 1, 1′. Puis, ces pièces moulées 1, 1′ seront fixées à l'intérieur respectivement de chaque arbalétrier 2, 2′ à l'aide de tous moyens connus tels que boulons, goujons, vis, broches, etc...

Lors de l'utilisation de ces arbalétriers 2, 2′, ceux-ci se trouvent donc déjà pourvus des pièces moulées 1, 1′.

Il ne suffit alors plus, pour les assembler, que d'emboîter les bossages 3, 3′ dans les trous 4, 4′ des deux pièces moulées 1, 1′.

On peut, par ailleurs, constater que la partie des pièces moulées 1, 1′ située à l'extérieur des arbalétriers 2, 2′ reste située à l'intérieur du périmètre fictif formé par la section des arbalétriers 2, 2′, ce qui présente l'avantage de pouvoir stocker et transporter plus facilement lesdits arbalétriers 2, 2′.

De plus, la structure des pièces moulées 1, 1′ elle-même (voile 8, 8′, nervures 9, 9′) a été conçue en vue d'obtenir des pièces moulées 1, 1′ les plus légères possible. Celles-ci pourront être avantageusement en alliage léger, par exemple en aluminium.

Selon une autre caractéristique de l'invention, et comme le montre la figure 2, chaque dispositif de verrouillage de sécurité 10 est sous la forme d'une tige 11 qui coulisse à travers des orifices de chaque pièce moulée 1, 1′ au niveau du trou 4, 4′, l'extrémité de la tige 11 pouvant s'engager dans un orifice 21, 21′ de chaque bossage 3, 3′ de manière à bloquer chaque emboîtement 3-4′ et 3′-4.

Un tel verrouillage permet entre autres de rendre l'opération de levage de la ferme assemblée au sol parfaitement sûre, la distance séparant les deux emboîtements étant suffisante pour assurer une stabilité parfaite à l'ensemble et les bossages 5, 5′ reprenant pratiquement tous les efforts lors de l'opération de levage elle-même.

Comme le montre la figure 2, la pièce moulée 1′ peut être munie de deux orifices 13′ permettant le passage des câbles de contreventement. Il en va de même pour la pièce moulée 1.

Selon une variante supplémentaire de l'invention, les nervures inférieures 9, 9′ formant la semelle de chaque pièce moulée 1, 1′ sont munies d'une ouverture chanfreinée 14, 14′ de manière à ce que, lorsque les deux pièces moulées 1, 1′ sont disposées tête-bêche, les deux ouvertures 14, 14′ coopèrent entre elles en formant un trou 15 à travers lequel peut s'engager l'axe 16 situé au sommet du poinçon 17 et muni d'une goupille 18 permettant le blocage dudit poinçon 17 au faîtage de la ferme.

Enfin, selon une dernière variante de l'invention, chaque pièce moulée 1, 1′ est pourvue d'une pièce de guidage 19 comportant une gorge 20. Cette pièce 19 permet, grâce à la gorge 20, le guidage de la bâche supportée par la charpente. Du fait de la forme spécifique de chaque pièce moulée 1, 1′, c'est-à-dire arrondie au niveau du faîtage, la bâche glisse parfaitement dans la gorge 20 lors du montage. La pièce 19 peut, par exemple, être fixée à chaque pièce moulée 1, 1′ grâce à des rivets.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention qui est déterminé par la teneur des revendications.

## Revendications

1. Dispositif d'assemblage de deux arbalétriers de ferme entre eux au niveau du faîtage, pour la réalisation de charpentes et de structures, caractérisé en ce qu'il consiste en deux pièces moulées (1, 1′), identiques entre elles, chacune étant disposée, de manière fixe, partiellement à l'intérieur de l'extrémité supérieure de chaque arbalétrier (2, 2′), la pièce moulée (1) étant disposée tête-bêche par rapport à la pièce moulée (1′), chaque pièce moulée (1, 1′) comportant un bossage (3, 3′) et un trou (4, 4′) de section identique, la dimension du trou (4, 4′) étant très légèrement supérieure à celle du bossage (3, 3′) de manière à ce que l'assemblage des deux arbalétriers (2, 2′) entre eux s'effectue par simple emboîtement du bossage (3) dans le trou (4′) et du bossage (3′) dans le trou (4), chaque emboîtement (3-4′) et (3′-4) étant, en outre, pourvu d'un dispositif de verrouillage (10).

2. Dispositif selon la revendication 1, caractérisé en ce que chaque bossage (3, 3′) est situé à une extrémité de la pièce moulée (1, 1′), de telle manière que l'emboîtement bossage (3) – trou (4′) s'effectue à proximité immédiate de l'arbalétrier (2') et l'emboîtement bossage (3') – trou (4) s'effectue à proximité immédiate de l'arbalétrier (2).

3. Dispositif selon l'une quelconque des revendications 1 et 2, caractérisé en ce que chaque pièce moulée (1 ou 1') est légèrement coudée et comprend différents bossages supplémentaires (5, 5') permettant de maintenir les pièces moulées (1, 1') dans les arbalétriers (2, 2'), la longueur de ces bossages (5, 5') correspondant sensiblement à la section interne des arbalétriers (2, 2') et les bossages (5, 5') servant de support à un ensemble de fixation, par exemple, vis (6) – écrou (7), la vis (6) traversant le bossage (5, 5'), par un orifice (12, 12'), ces bossages (5, 5') étant, par ailleurs, reliés entre eux par un voile (8, 8') situé dans le plan perpendiculaire aux axes centraux des bossages (5, 5') et légèrement décalé par rapport à l'axe de symétrie (A) de chaque arbalétrier (2, 2'), et par des nervures (9, 9') situées, par exemple, dans le plan passant par les axes centraux des bossages (5, 5').

4. Dispositif selon l'une quelconque des revendications 1 à 3, caractérisé en ce que chaque dispositif de verrouillage (10) se présente sous la forme d'une tige (11) qui coulisse à travers des orifices de chaque pièce moulée (1, 1') au niveau du trou (4, 4'), l'extrémité de la tige (11) pouvant s'engager dans un orifice (21, 21') de chaque bossage (3, 3') de manière à bloquer chaque emboîtement (3-4') et (3'-4).

5. Dispositif selon l'une quelconque des revendications 1 à 4, caractérisé en ce que la pièce moulée (1') est munie, en outre, de deux orifices (13') permettant le passage des câbles de contreventement, ainsi que la pièce moulée (1).

6. Dispositif selon l'une quelconque des revendications 1 à 5, caractérisé en ce que les nervures inférieures (9, 9') formant la semelle de chaque pièce moulée (1, 1') sont munies d'une ouverture chanfreinée (14, 14') de manière à ce que, lorsque les deux pièces moulées (1, 1') sont disposées tête-bêche, les deux ouvertures (14, 14') coopèrent entre-elles en formant un trou (15) à travers lequel peut s'engager l'axe (16) situé au sommet du poinçon (17) et muni d'une goupille (18) permettant le blocage dudit poinçon (17) au faîtage de la ferme.

7. Dispositif selon l'une quelconque des revendications 1 à 6, caractérisé en ce que chaque pièce moulée (1, 1') est pourvue d'une pièce de guidage (19) comportant une gorge (20).

8. Dispositif selon l'une quelconque des revendications 1 à 7, caractérisé en ce que les pièces moulées (1, 1') sont en alliage léger.

9. Dispositif selon la revendication 8, caractérisé en ce que les pièces moulées (1, 1') sont avantageusement en aluminium.

## Ansprüche

1. Vorrichtung zur Verbindung von zwei Trägern eins Gerüsts in der Höhe des Firstes zum Herstellen von Rahmen und Baukonstruktionen, dadurch gekennzeichnet, daß sie aus zwei gegossenen, untereinander identischen Teilen (1, 1') besteht, die beide teilweise im Innern des oberen Endes jedes Trägers (2, 2') fest angeordnet sind, daß das gegossene Teil (1) bezüglich des gegossenen Teils (1') umgekehrtherum Kopf bei Fuß angeordnet ist, daß jedes gegossene Teil (1, 1') einen Vorsprung (3, 3') und ein Loch (4, 4') gleichen Querschnitts aufweist, wobei die Größe der Löcher (4, 4') gegenüber der der Vorsprünge (3, 3') leichtes Übermaß aufweist, der Art, daß die Verbindung der beiden Träger (2, 2') miteinander durch simples Einstecken des Vorsprungs (3) in das Loch (4') und des Vorsprungs (3') in das Loch (4) bewerkstelligbar ist, und daß jede Verzapfung (3, 4') und (3', 4) mit einer Verriegelungseinrichtung (10) versehen ist.

2. Vorrichtung nach Anspruch 1, dadurch gekennzeichnet, daß jeder Vorsprung (3, 3') an einem Ende des gegossenen Teils (1, 1') angeordnet ist, der Art, daß die Verzapfung von Vorsprung (3) – Loch (4') in unmittelbarer Nähe des Trägers (2') und die Verzapfung von Vorsprung (3') – Loch (4) in unmittelbarer Nähe des Trägers (2) bewerkstelligbar ist.

3. Vorrichtung nach einem der Ansprüche 1 und 2, dadurch gekennzeichnet, daß jedes gegossene Teil (1, 1') leicht gekrümmt ist und verschiedene Zusatzvorsprünge (5, 5') umfaßt, die dazu dienen, die gegossenen Teile (1, 1') in den Trägern (2, 2') zu halten, wobei die Länge dieser Vorsprünge (5, 5') genau dem Innenquerschnitt der Träger (2, 2') entspricht und die Vorsprünge (5, 5') dazu dienen, eine Befestigungseinrichtung aufzunehmen, z.B. Schraube (6) – Mutter (7), wobei die Schraube (6) eine Ausnehmung (12, 12') des Vorsprungs (5, 5') durchdringt und daß die Vorsprünge (5, 5') durch ein Flächentragwerk (8, 8') miteinander verbunden sind, das in der zu den zentralen Achsen der Vorsprünge (5, 5') senkrechten Ebene liegt und leicht verschoben in Bezug auf die Symmetrieachse (A) jedes Trägers (2, 2') und in Bezug auf Rippen (9, 9') angebracht ist, die z.B. in der durch die Zentralachsen der Vorsprünge (5, 5') verlaufenden Ebene liegen.

4. Vorrichtung nach einem der Ansprüche 1 bis 3, dadurch gekennzeichnet, daß die Verriegelungseinrichtung (10) in Form eines Bolzens (11) ausgebildet ist, der die Öffnungen jedes der gegossenen Teile (1, 1') auf Höhe der Löcher (4, 4') durchdringt, so daß das Endstück des Bolzens (11) mit einer Ausnehmung (21, 21') jedes Vorsprungs (3, 3') zum Eingriff bringbar ist, um jede Verzapfung (3-4') und (3'-4) zu blockieren.

5. Vorrichtung nach einem der Ansprüche 1 bis 4, dadurch gekennzeichnet, daß das gegossene Teil (1') außerdem zwei Löcher (13') aufweist, die von Querverbindungsdrähten durchsetzbar sind und daß das entsprechend auch für das gegossene Teil (1) gilt.

6. Vorrichtung nach einem der Ansprüche 1 bis 5, dadurch gekennzeichnet, daß die unteren Rippen (9, 9'), die die Sohle jedes gegossenen Teiles (1, 1') bilden, eine abgeschrägte Öffnung (14, 14') haben, so daß, falls die beiden gegossenen Teile (1, 1') zueinander Kopf bei Fuß angeordnet sind, die beiden Öffnungen miteinander kooperierend ein Loch (15) bilden, in welches die Achse (16) zum Eingriff bringbar ist, die an der Spitze des Pfriems (17) angeordnet ist und mit einem Splint (18) versehen ist, der die Sicherung besagten Pfriems (17) im Bereich des Gerüstfirstes gewährleistet.

7. Vorrichtung nach einem der vorhergehenden Ansprüche 1 bis 6, dadurch gekennzeichnet, daß jedes gegossene Teil (1, 1') mit einem Führungsteil (19), welches eine Nut (20) hat, versehen ist.

8. Vorrichtung nach einem der vorhergehenden Ansprüche 1 bis 7, dadurch gekennzeichnet, daß die gegossenen Teile (1, 1') aus Leichtmetall bestehen.

9. Vorrichtung nach Anspruch 8, dadurch gekennzeichnet, daß die gegossenen Teile (1, 1') vorteilhafterweise aus Aluminium bestehen.


**Claims**

1. Device for joining together two truss rafters in the region of the ridge beam for the production of frameworks and structures, characterised in that it consists of two moulded parts (1, 1') which are identical to one another, each one being stationarily arranged partially inside the upper end of each rafter (2, 2'), the moulded part (1) being inverted relative to the moulded part (1'), each moulded part (1,1') comprising a boss (3, 3') and a hole (4, 4') of identical cross section, the dimension of the hole (4, 4') being very slightly greater than that of the boss (3, 3') so that the two rafters (2, 2') are joined together merely by fitting the boss (3) into the hole (41) and the boss (3') into the hole (4), each fitting (3-4') and (3'-4) also being provided with a locking device (10).

2. Device according to claim 1, characterised in that each boas (3, 3') is located at one end of the moulded part (1, 1') such that the boss (3) and hole (4') are fitted in the immediate vicinity of the rafter (21) and the boss (3') and hole (4) are fitted in the immediate vicinity of the rafter (2).

3. Device according to any one of claims 1 and 2, characterised in that each moulded part (1 or 1') is slightly bent and comprises various additional bosses (5, 5') for holding the moulded parts (1, 1') in the rafters (2, 2'), the length of these bosses (5, 5') corresponding substantially to the internal cross section of tie rafters (2, 2') and the bosses (5, 5') serving as a support for a fixing unit, for example bolt (6) – nut (7), the bolt (6) traversing the boss (5, 5') through an orifice (12, 12') these bosses (5, 5') also being joined together by a covering (8, 8') located in the plane perpendicular to the central axes of the bosses (5, 5') and slightly offset relative to the axis of symmetry (A) of each rafter (2, 2') and by ribs (9, 9') located, for example, in the plane passing through the central axes of the bosses (5, 5').

4. Device according to any one of claims 1 to 3, characterized in that each locking device (10) has the form of a rod (11) which slides through the orifices in each moulded part (1, 1') in the region of the hole (4, 4'), the end of the rod (11) being able to engage in an orifice (21, 21') of each boss (3, 3') so as to lock each fitting (3-41) and (3'-4).

5. Device according to any one of claims 1 to 4, characterised in that the moulded part (11) is also equipped with two orifices (13') following the passage of cross-bracing cables as well as the moulded part (1).

6. Device according to any one of claims 1 to 5, characterised in that the lower ribs (9, 9') forming the base of each moulded part (1, 1') are equipped with a bevelled opening (14, 14') so that, when the two moulded parts (1, 1') are inverted relative to one another, the two openings (14, 14') cooperate with one another to form a bole (15) through which the shaft (16) located at the top of the punch (17) and equipped with a pin (18) for locking said punch (17) to the ridge beam of the truss can engage.

7. Device according to any one of claims 1 to 2, characterised in that each moulded part (1, 1') is provided with a guiding part (19) comprising a groove (20).

8. Device according to any one of claims 1 to 7, characterised in that the moulded parts (1, 1') are of a light alloy.

9. Device according to claim 8, characterised in that the moulded parts (1, 1') are advantageously of aluminium.

Fig.1

Fig.4

Fig.3

Fig. 2

EP 0 301 988 B1